# FASCICULE DE BREVET EUROPEEN

(11) **EP 2 563 108 B1**
(45) Date de publication et mention de la délivrance du brevet: **10.01.2018**
(21) Numéro de dépôt: 11723537.4
(22) Date de dépôt: 29.04.2011
(51) Int. Cl.: A01C 7/20

(54) **ENSEMBLE SEMEUR POUR SEMOIR**
SÄEINHEIT FÜR EINE SÄMASCHINE
SEEDING APPARATUS FOR A SEEDER

(30) Priorité: 30.04.2010 FR 1053359
(43) Date de publication de la demande: 06.03.2013
(73) Titulaire: Vallaey Landbouwmachines SA, 8810 Lichtervelde (BE)
(72) Inventeur: BALLU, Patrick Jean Marie, 51100 Reims (FR)
(74) Mandataire: Ostyn, Frans
(86) Numéro de dépôt international: PCT/FR2011/050981
(87) Numéro de publication internationale: WO 2011/135272

(56) Documents cités:
- WO-A1-01/54484
- DE-A1-102008 044 520
- US-B1- 6 651 570

## Description

L'invention concerne un élément semeur pour machine agricole et un semoir correspondant.

Elle concerne principalement mais non exclusivement les éléments semeurs destinés aux semis dits de précision.

Un semoir est une machine destinée à mettre automatiquement des graines en terre au fur et à mesure de l'avancée d'une machine agricole, telle qu'un tracteur, l'espacement entre les graines et leur profondeur de mise en terre étant déterminés et réglables.

Les semoirs destinés aux semis de précision doivent assurer une mise en place précise des graines en terre, à savoir les semer selon une ligne parfaite, un écartement régulier et une profondeur de semis et un plombage constant.

Un tel semoir comprend, de manière générale, un châssis sur lequel sont disposés une trémie destinée à contenir un stock de graines à semer, et un ou plusieurs éléments semeurs montés sur le châssis, en rangée, perpendiculairement à la direction d'avancement de la machine agricole.

La trémie alimente un moyen de distribution des graines tel qu'un disque de distribution ou un sabot distributeur d'un ou plusieurs éléments semeurs.

Dans le cas d'un semoir avec plombage de la graine, le sabot distributeur est associé à une roue plombeuse, la graine est conduite depuis la trémie jusqu'à un orifice du sabot d'où elle est éjectée et aussitôt arrêtée, sensiblement entre le fond du sillon creusé par le soc et la roue plombeuse.

Une fois la graine arrêtée, la roue plombeuse vient tasser le fond du sillon et enfoncer légèrement la graine dans la terre.

Le plombage est efficace, direct sur la graine qui est imprimée dans le lit de semence.

L'ensemble est, également, complété d'une roue de jauge servant au réglage de la profondeur de mise en terre des graines.

Idéalement, la roue de jauge se situe au plus prêt de la mise en terre des graines.

Un tel semoir est utilisé, le plus souvent, au cours de techniques culturales traditionnelles, c'est-à-dire de techniques pour lesquelles un semis est d'abord précédé d'un labour du sol.

Or, actuellement, il arrive de plus en plus souvent que les semis soient réalisés par des techniques dites de cultures simplifiées selon lesquelles on limite le travail au sol.

Ces techniques consistent, plus précisément, à ne pas utiliser de charrue et laisser des débris végétaux (paille, chaume, couvert végétaux) plus ou moins importants à la surface du champ à semer, afin de conserver une structure de sol intacte pour prévenir, notamment, les phénomènes d'érosion.

Les semoirs permettant un semis de précision ne sont, parfois, pas adaptés à une application aux techniques culturales simplifiées.

Dans ce type de technique, lors du semis, il peut se produire un bourrage au niveau du sabot distributeur de graines par les débris végétaux de sorte que le sabot présente des difficultés pour ouvrir le sillon.

Par ailleurs, on ne maîtrise pas la nature du sol et, notamment sa dureté, ce qui peut rendre difficile l'enfoncement du sabot distributeur dans le sol à une profondeur déterminée.

Pour ce type de technique culturale simplifiée, il est alors indispensable de monter sur l'élément semeur au moins un disque ouvreur en amont du sabot distributeur, ce disque écartant la terre en amont du sabot formant soc, facilitant l'ouverture du sillon dans lequel les graines seront semées et permettant d'éviter que les débris végétaux viennent se coincer contre le soc.

Le disque ouvreur n'étant pas indispensable pour les techniques culturales traditionnelles, il peut être nécessaire de le monter et le démonter en fonction de la technique culturale envisagée par l'opérateur.

Par ailleurs, on constate que la profondeur à laquelle sont mis en place un ou plusieurs disques ouvreurs lors de leur montage sur l'élément semeur, bien que facilitant la formation du sillon, n'est parfois pas adaptée à la dureté du sol traité et aux cultures envisagées avec l'élément semeur, dont la profondeur de semis varie en fonction de la culture choisie.

La qualité du semis et la germination peuvent être affectées par ce mauvais montage des disques ouvreurs.

L'adjonction d'un disque ouvreur au soc distributeur et à la roue plombeuse nécessite une conception compacte qui évite les risques de bourrage mais permet à l'accessibilité aux différents organes de réglage.

Enfin, le réglage commun de la pression d'appui du disque et de la roue plombeuse peut entraîner une discontinuité de l'appui de cette roue au sol, par soulèvement du disque lorsque celui-ci rencontre des variations importantes et plus ou moins régulières de dureté du sol telles qu'un obstacle comme une pierre ou des écarts sensibles de la dureté du sol.

La qualité et la continuité du semis peuvent être affectées par ces obstacles.

Un but de la présente invention vise à remédier aux inconvénients précités.

Un autre but de la présente invention est de proposer une solution pour adapter un ou plusieurs disques ouvreurs aux éléments semeurs de précision, tout en conservant leurs caractéristiques intrinsèques.

Un autre but de la présente invention est de proposer un élément semeur polyvalent, à savoir adaptable suivant la technique culturale utilisée et la nature du sol ou la culture envisagées, aussi bien en technique culturale simplifiée qu'en terre labourée.

II est aussi désirable de proposer un élement semeur polyvalent et compact avec des moyens simples et faciles à appréhender.

Un autre but de l'invention est d'assurer un semis de précision, graine par graine, sur terrain non labouré présentant des débris végétaux.

II est aussi désirable de proposer un élement semeur favorisant la continuité du plombage des graines. Un ensemble semeur comportant les caractéristiques du préambule de la revendiction 1 est connu par WO-A-0154484.

L'invention propose un ensemble semeur comprenant les caractéristiques de la revendication 1.

Selon d'autres caractéristiques de l'invention, l'ensemble semeur de l'invention comporte l'une ou plusieurs des caractéristiques optionnelles suivantes considérées seules ou selon toutes les combinaisons possibles:
- l'empreinte du disque ouvreur dans le sol se situe en dehors d'une section de rappui Sp des graines définie comme l'épaisseur, sur la largeur de la roue plombeuse, entre les extrémités inférieures du soc et de la roue plombeuse;
- la partie inférieure du soc comprend au moins un biseau;
- la partie inférieure du soc présente une forme symétrique par rapport la ligne de semis;
- la partie arrière du soc présente une largeur plus grande que la largeur de la roue plombeuse ;
- l'ensemble semeur comprend, en outre, des moyens de réglage de la position du disque ouvreur en hauteur de façon relative au soc de manière à régler la profondeur du disque dans le sol et/ou des moyens de réglage de la position longitudinale du disque ouvreur de manière à régler l'avancée dudit disque par rapport au soc ;
- les moyens de réglage de la hauteur et/ou de la position longitudinale du disque ouvreur relativement au soc sont adaptés pour maintenir l'orientation oblique définie entre le disque ouvreur et la face latérale du soc à chaque déplacement dudit disque ouvreur de sorte de garantir l'affleurement du disque ouvreur avec l'arête frontale du soc;
- l'ensemble semeur comprend, en outre, des moyens pour escamoter le disque ouvreur dans une position inopérante sans contact avec le sol ;
- le disque ouvreur et l'élément semeur comprennent des moyens de pression au sol indépendants ;
- le disque ouvreur et l'élément semeur comprennent des moyens de pression au sol d'intensité réglable séparément;
- l'ensemble semeur comprend des moyens de réglage de la hauteur de la roue de jauge relativement à la roue plombeuse à des hauteurs prédéterminées, ces moyens comprenant au moins un arbre articulé, d'une part, sur un axe coaxial à un axe de rotation de la roue plombeuse et, d'autre part, sur un axe de rotation de la roue de jauge de sorte d'excentrer la roue de jauge de son axe de rotation lors du réglage de sa hauteur;
- les moyens de réglage de la hauteur de la roue de jauge relativement à la roue plombeuse comprennent, en outre, un crabot de positionnement à crans ou à ressort;
- les moyens de réglage de la hauteur de la roue de jauge relativement à la roue plombeuse comprennent, en outre, des moyens d'actionnement susceptibles de faire pivoter l'arbre autour de l'axe coaxial à l'axe de rotation de la roue plombeuse de sorte de modifier l'angle d'inclinaison de l'arbre par rapport à la direction d'avancement de l'ensemble semeur, ces moyens d'actionnement comprenant au moins un élement de préhension monté à une extrémité de l'arbre et susceptible de pivoter vers au moins une position indiquant une profondeur de la roue de jauge.

L'invention concerne également un semoir comprenant un châssis porteur sur lequel est articulé au moins un ensemble semeur tel que précité.

D'autres caractéristiques, buts et avantages de la présente invention apparaîtront à la lecture de la description détaillée qui va suivre, selon des modes de réalisation donnés à titre d'exemples non limitatifs, et faite en référence aux dessins annexés sur lesquels :
- la figure 1 représente une vue latérale d'un élément semeur selon un premier mode de réalisation de la présente invention ;
- la figure 2 représente une vue de dessus de l'élément semeur de la figure 1 illustrant l'orientation de son disque ouvreur par rapport au plan P1 perpendiculaire au sol et passant par la ligne de semis ;
- la figure 3 représente une vue frontale de l'élément semeur de la figure 1 illustrant l'orientation de son disque ouvreur par rapport au plan P1 perpendiculaire au sol et passant par la ligne de semis ;
- la figure 4 représente une vue en coupe selon AA de l'élément semeur de la figure 1 ;
- la figure 5 représente une vue latérale opposée de l'élément semeur de la figure 1 ;
- les figures 6a à 6c représentent un soc 2 de l'élément semeur de la figure 1 en plusieurs vues ;
- les figures 7, 8 et 9 représentent trois vues en perspective partielle de différents éléments constitutifs d'un ensemble de réglage de la position du disque ouvreur de l'élément semeur de la figure 1,
- les figures 10a à 10c représentent des vues latérales d'un élément semeur de la figure 1 dont le disque ouvreur présente différentes positions de réglage;
- les figures 11a et 11b représentent des vues en perspective d'un élément semeur de la figure 1 dont une roue de jauge présente différentes positions de réglage ;
- la figure 11c représente une vue en perspective et latérale d'un élément semeur selon un second mode de réalisation de la présente invention dont la roue de jauge se situe sur l'arrière ;
- la figure 11d représente une vue en perspective et latérale d'un élément semeur selon un troisième mode de réalisation de la présente invention dont la roue de jauge se situe sur l'avant ;
- la figure 11e représente une vue en perspective et latérale d'un élément semeur selon un quatrième mode de réalisation de la présente invention avec roues de jauge avant et arrière montées sur palonnier ;
- la figure 12 est une vue en coupe du mécanisme de réglage de la roue de jauge de l'élément semeur de la figure 1 ;
- les figures 13a et 13b représentent, chacune, une vue en perspective d'un crabot de positionnement de la roue de jauge montée sur un arbre de l'élément semeur de la figure 1.

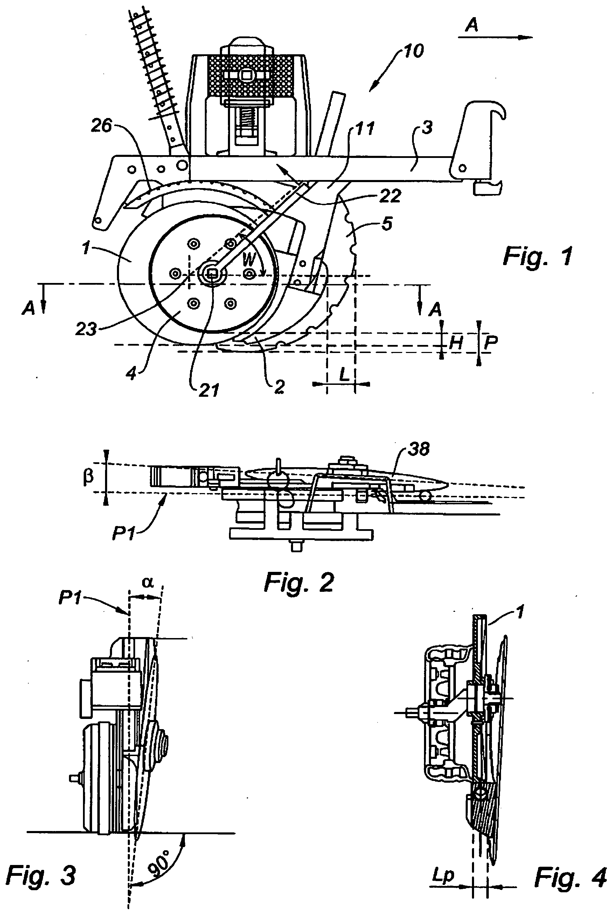

Un semoir (non représenté) comprend un dispositif de stockage de semences placé sur un châssis supportant une barre transversale de semis sur laquelle sont fixés plusieurs éléments semeurs répartis régulièrement le long de la barre et alignés, dont l'un est désigné par la référence générale 10 sur la figure 1.

Chaque élement semeur 10 est destiné à mettre en terre dans un champ des graines contenues dans le dispositif de stockage de semence.

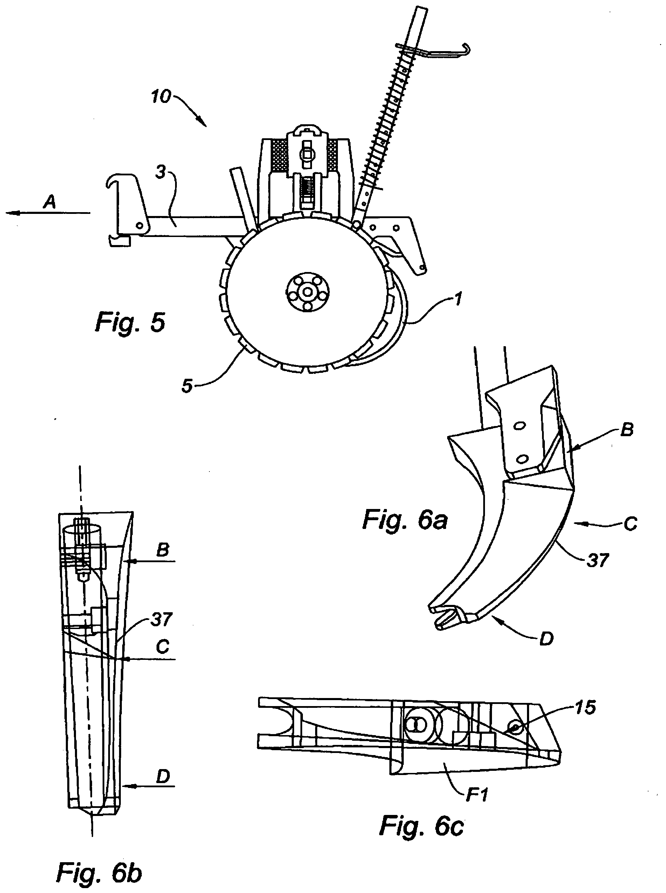

En référence aux figures 1 et 5, chaque élément semeur 10 comprend un bras 3 longitudinal s'étendant dans la direction d'avancement A du semoir, sur lequel sont fixés au moins un disque ouvreur 5 destiné notamment à écarter la terre pour faciliter le passage d'un sabot distributeur de graines formant soc 2, lequel ouvre un sillon dans le sol au cours du déplacement du semoir et conduit des graines grâce à un canal présent sur sa face arrière qui entoure la périphérie externe d'une roue plombeuse 1.

La roue plombeuse 1, quant à elle, est destinée à arrêter, puis rappuyer les graines sensiblement entre le fond du sillon creusé par le soc 2 et le bas de ladite roue plombeuse 1.

Il est à noter que la largeur de la roue plombeuse 1 peut être inférieure à celle de la largeur de la face arrière du soc 2, situé en amont et donc de la largeur du sillon formé, ceci afin de limiter les efforts de pénétration de la roue plombeuse 1 dans le sol à une certaine section de la roue utilisée pour le rappui de la graine.

Dans le mode de réalisation illustré sur la figure 1, une roue de jauge 4 destinée à régler la profondeur du semis réalisé est montée latéralement à la roue plombeuse 1.

Cette roue de jauge 4, adjacente à la roue plombeuse 1, est articulée dans l'axe de ladite roue plombeuse 1

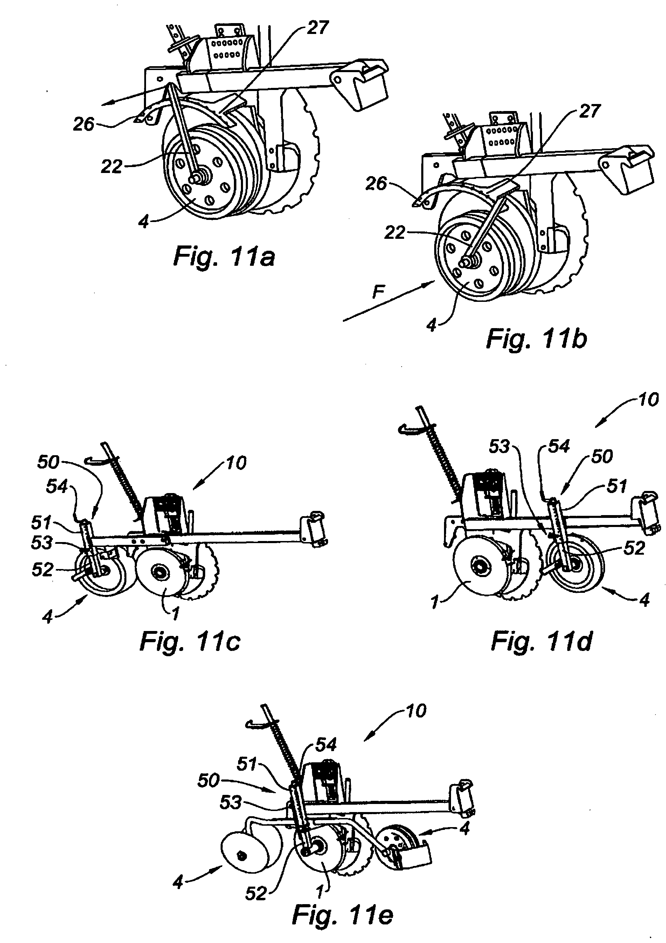

Des variantes de réalisation illustrées sur les figures 11c et 11d proposent des éléments semeurs 10 dont la roue de jauge 4 se situe, respectivement, à l'arrière, et à l'avant de la roue plombeuse 1 et une autre variante de réalisation illustrée sur la figure 11e propose un élément semeur 10 dont les roues de jauge 4 se situent à l'avant et l'arrière de la roue plombeuse 1 et sont montées sur un palonnier.

L'axe principal de rotation 23 de la roue plombeuse 1 et le soc 2 sont portés, quant à eux, par une platine de support commune 11 et fixe, s'étendant parallèlement aux roues et solidaire du bras 3.

Concernant la conformation du soc 2, celle-ci peut présenter la forme illustrée sur les figures 6a à 6c, dans un exemple non limitatif de la présente invention.

Ainsi, le soc 2 peut présenter une forme générale prismatique.

Comme illustré plus particulièrement sur la figure 6b, l'avant du soc 2 présente, en partie supérieure (zone B) une section large destinée à la fixation du soc 2 sur la platine 11, prolongée vers le sol par une partie intermédiaire sous forme d'une arête frontale 37 affinée (zone C), qui sert de raclette au disque ouvreur 5, comme on va le voir plus loin.

Cette zone affinée 37 se prolonge, quant à elle, vers le bas par une zone en contact (zone D) avec le sol et les débris végétaux qui s'élargit progressivement pour définir la largeur de l'empreinte formant le sillon.

Par ailleurs, avantageusement, en référence à la figure 6c, le soc 2 comporte, en partie inférieure D, à l'avant du soc 2 et du coté opposé au disque ouvreur 5, un biseau 15 dont l'angle d'orientation est opposé à celui de l'angle d'orientation du disque ouvreur 5 par rapport à la direction d'avancement A de l'élément semeur.

L'opposition de ces deux angles permet avantageusement un équilibre des efforts transversaux de pénétration du disque 5 et du soc 2 dans le sol.

Dans une variante de réalisation, la partie inférieure D du soc 2 n'est plus en biseau simple mais présente deux biseaux symétriques pour rencontrer le sillon avant l'arrivée de la graine centrés sur la ligne de semis.

Il est à noter que la partie inférieure D du soc 2 est toujours adaptée pour obtenir un sillon plat.

Par ailleurs, la partie arrière du soc 2 présente une largeur plus grande que la largeur de la roue plombeuse 1 afin d'éviter toute butée sur la terre de la roue plombeuse 1.

Concernant le disque ouvreur 5 illustré notamment sur les figures 1 et 5, il s'agit d'un disque de faible épaisseur destiné à protéger le soc 2, ainsi qu'une partie de la roue plombeuse 1, afin d'éviter l'interposition de débris végétaux au contact de la graine.

Ce disque ouvreur 5 est monté en rotation autour d'un axe transversal à la direction d'avancement A du semoir et incliné par rapport à la direction perpendiculaire à ladite direction d'avancement A.

Comme illustré aux figures 2 et 3, le soc 2 présentant une face latérale plane F1 (visible sur la figure 6c) en regard du disque ouvreur 5, le disque ouvreur 5 est ainsi légèrement oblique par rapport à la face latérale F1 c'est à dire orienté suivant les angles α et β par rapport à la face latérale F1 du soc 2.

Les angles α et β sont définis sur les figures 2 et 3 par rapport au plan P1, perpendiculaire au sol et passant par la ligne de semis, dans la direction d'avancement A du semoir.

Ainsi, le disque ouvreur 5 est adjacent au soc 2 et, plus précisément, le disque ouvreur 5 est orienté de sorte à être en affleurement avec l'arête 37 frontale du soc 2 servant de raclette pour décrotter le disque ouvreur 5 et pour éviter le bourrage du soc 2.

De plus, le disque ouvreur 5 est monté adjacent au soc 2 de sorte à être suffisamment près de la zone de sortie de la graine à l'arrière du soc 2 afin de servir de protection et de guide latéral à la graine avant son plombage.

Une variante de réalisation peut prévoir plusieurs disques ouvreurs 5 de part et d'autre de la roue plombeuse 1.

Quel que soit le nombre de disques ouvreurs 5, l'empreinte de ce disque 5 dans le sol se situe en dehors du passage de la roue plombeuse 1 afin de préserver la section de rappui des graines Sp constituée par la terre dense située sensiblement entre le fond du sillon creusé par le soc 2 et la bande de roulement de la roue plombeuse 1 et délimitée latéralement par la largeur du passage Lp de la roue plombeuse 1 illustrée sur la figure 4.

Par ailleurs, dans l'exemple illustré sur la figure 1, le disque 5 présente une forme crénelée.

Toutefois, tout autre type de conformation susceptible de protéger le soc 2 peut être envisagé comme, par exemple, une conformation ondulée ou en étoile.

Par ailleurs, avantageusement, le disque ouvreur 5 est réglable en hauteur et/ou en position longitudinale relativement au soc 2, de manière à régler la profondeur d'enterrage dans le sol, désignée par P et l'avancée du disque 5 par rapport audit soc 2 désignée par L sur la figure 1.

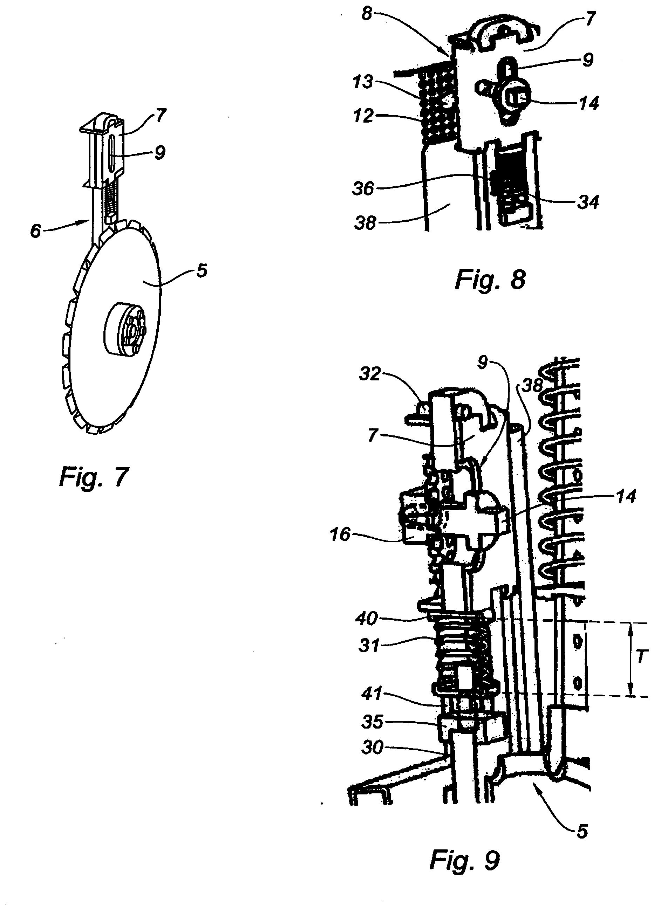

Tel qu'illustré sur les figures 7 à 9, un ensemble de réglage de la hauteur et de la position longitudinale du disque ouvreur 5 comprend un bras 6 porte disque ouvreur 5 s'étendant verticalement, muni, dans sa partie supérieure, d'une bride 7 de fixation dudit bras comprenant des crans 8 de positionnement verticaux et d'une coulisse 9 de réglage vertical de forme oblongue.

L'ensemble comprend, en outre, une platine 38 destinée à servir d'appui audit bras 6 porte disque, parallèle au bras 6.

Cette platine 38 comprend une coulisse horizontale 13 et des moyens de réglage 12 prédéterminés de la position du disque ouvreur 5.

Ainsi, plusieurs orifices 12 sont ménagés et répartis sur la surface de la platine 38 sous forme d'une grille avec un pas prédéterminé.

Ces orifices 12 correspondent chacun à une position particulière de réglage du bras 6 porte disque et donc du disque 5 en hauteur et longitudinalement par rapport au soc 2.

Ils servent de repère visuel pour régler facilement la hauteur et la position longitudinale du disque ouvreur 5 à une position prédéterminée.

Ces orifices 12 sont destinés à coopérer avec des crans d'arrêt 8 ménagés en saillie sur le bras 6 vers la platine 38 et susceptibles d'être indexés dans ces orifices.

La hauteur et l'avancée du disque 5 sont ainsi fonction du positionnement respectivement vertical et horizontal des crans 8 de la bride 7 dans les orifices 12 de la platine 38.

La hauteur et l'avancée du disque ouvreur 5 relativement au soc 2 sont donc fonction de leur déplacement vertical et/ou horizontal par rapport à la direction d'avancement A de l'élément semeur 10.

La variation de la hauteur et de la position longitudinale du bras 6 support de disque est obtenue par des moyens d'actionnement 14 susceptibles de libérer le bras 6 et de le déplacer sur la platine 38, entraînant le changement de la hauteur et de la position longitudinale du disque ouvreur 5 et, par conséquent, sa profondeur dans le sol P et de son avancée L relativement au soc 2.

Ces moyens d'actionnement 14 sont également susceptibles d'immobiliser et de maintenir en position le bras 6 support de disque 5 sur la platine 38.

Ces moyens d'actionnement 14 comprennent, dans un exemple non limitatif, des moyens de serrage de type vis 14 - écrou 16 ou tout autre moyen adapté.

L'ensemble de réglage de la hauteur et de la position longitudinale du disque ouvreur 5 est mis en oeuvre de la façon suivante.

Le maintien en position du bras 6 support de disque et son immobilisation sont assurés par serrage de la vis 14 sur l'écrou 16.

Après desserrage de la vis 14, le bras 6 support de disque est libéré de la platine 38 c'est-à-dire que l'on libère les crans d'arrêt 8 des orifices 12 dans lesquels ils étaient engagés, afin de les immobiliser dans une position différente correspondant à une hauteur et une position longitudinale désirées du disque ouvreur 5 dans un plan vertical orienté suivant les angles α et β.

On peut ainsi passer d'une première position du disque ouvreur 5 à une seconde position différente par simple déplacement du bas vers le haut et/ou de l'avant vers l'arrière et inversement du bras 6, dans un plan vertical orienté suivant les angles α et β.

Lorsque la position du disque ouvreur 5 est arrêtée, les crans d'arrêt 8 s'engagent dans les orifices 12 correspondant de la platine 38 associés à cette position afin de bloquer en position le bras 6 et, par conséquent, le disque ouvreur 5.

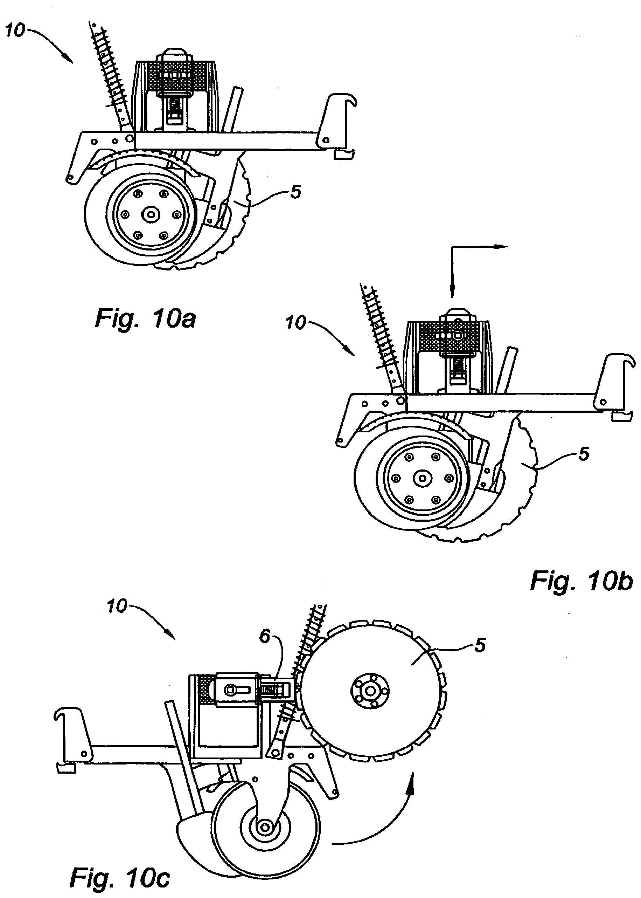

Les figures 10a et 10b illustrent le disque ouvreur 5 dans deux positions d'avancée et de hauteur différentes, le disque ouvreur 5 sur la figure 10b étant abaissé et avancé par rapport à sa position sur la figure 10a.

Il est à noter qu'avantageusement, la position du disque ouvreur 5 est réglable en hauteur et longitudinalement tout en maintenant le disque ouvreur 5 parallèle à lui-même et adjacent à la face latérale F1 du soc 2.

La position du disque ouvreur 5 et son orientation par rapport à la face latérale F1 du soc 2 est constante et indépendante de la position du bras 6 support de disque 5.

En effet, la face latérale F1 du soc 2 et la platine 38 sont orientées de façon relative suivant des angles α et β par rapport au plan P1, perpendiculaire au sol et passant par la ligne de semis, dans la direction d'avancement A du semoir c'est à dires des angles identiques à ceux du disque ouvreur 5 avec la face latérale F1 du soc 2.

Ainsi, le bras 6 support de disque et le disque ouvreur 5 se déplacent suivant une trajectoire parallèle à un plan orienté suivant les angles α et β matérialisés par la face latérale du disque 5 en contact avec la face latérale F1 du soc 2.

Grâce à un tel réglage, le disque ouvreur 5 reste en affleurement avec l'arête 37 du soc 2 indépendamment de sa position.

On assure ainsi, le bon nettoyage du disque ouvreur 5 et on évite l'entrée de débris végétaux, ce qui garantit la continuité de la rotation dudit disque 5.

Par ailleurs, les orifices 12 de la platine 38 sont disposés de manière à favoriser le maintien du disque ouvreur 5 en dehors de la section Sp de rappui des graines, en affleurement avec l'arête avant 37 du soc 2, quel que soit le réglage en hauteur et longitudinale du disque ouvreur 5.

Ainsi, avantageusement, en fonction de la nature du sol, de la culture envisagée et du type de technique pratiquée, on peut choisir la position idéale du disque ouvreur 5.

La position idéale est, de préférence, telle que la profondeur P du disque ouvreur 5 dans le sol est légèrement supérieure à celle du soc 2 et de la roue plombeuse 1 dans le sol, profondeur désignée par H sur la figure 1.

Grace à un tel réglage, on s'assure, également, que quelle que soit la profondeur du semis et la nature du sol traité, l'entraînement du disque ouvreur 5 est assuré.

On peut ainsi semer à une profondeur variable en fonction du type de culture.

En outre, avantageusement, le réglage de la profondeur et de l'avancée du disque ouvreur 5 s'effectue de façon simple, rapide et précise.

De part la présence de crans d'arrêt 8 et d'orifices 12 correspondants, le réglage de la profondeur et de l'avancée d'un disque ouvreur 5 est, également, facilement reproductible pour l'ensemble des disques ouvreurs des éléments semeurs d'un même semoir.

De plus, l'élément semeur 10 devient polyvalent pour l'ensemble des techniques culturales connues.

En effet, si le type de technique le commande, en ayant choisi la position idéale du disque ouvreur 5, il est possible d'escamoter le bras 6 support du disque horizontalement, sans contact au sol dans une position inopérante, comme le montre la figure 10c.

En effet, l'ensemble de réglage de la hauteur et de la position longitudinale du disque ouvreur 5 relativement au soc 2 comprennent, en outre, des moyens susceptibles de faire pivoter et d'immobiliser ledit bras 6 support de disque en position horizontale dans une position inopérante sans contact avec le sol.

On s'affranchit, ainsi, d'un démontage du disque ouvreur 5 de l'élément semeur 10.

Dans une variante de réalisation, il est prévu que le disque ouvreur 5 et la roue plombeuse 1 aient des diamètres différents et donc des vitesses de rotation en proportion, ceci permettant d'éviter les dépôts de terre et les bourrages éventuels de la roue plombeuse 1, compte tenu de sa proximité avec le disque ouvreur 5.

Par ailleurs, avantageusement, l'élément semeur 10 est adapté pour permettre au disque ouvreur 5 de se soulever au contact d'un obstacle ou d'une variation sensible de la dureté du sol sans incidence sur le plombage des graines.

Pour cela, le disque ouvreur 5 et l'élément semeur 10 comprennent des moyens de pression au sol indépendants.

Dans une variante de réalisation, le disque ouvreur 5 et l'élément semeur 10 comprennent des moyens de pression au sol d'intensité réglable séparément.

Dans un mode de réalisation de la présente invention, la pression au sol du disque ouvreur 5 peut être réglable de façon relative à la pression principale de l'élément semeur 10, elle même variable en fonction de la dureté du sol, de manière à permettre au disque ouvreur 5 de s'escamoter sous l'effet d'un obstacle tel qu'une pierre qui est susceptible de faire soulever l'élément semeur 10 et, ainsi, de perturber sensiblement le plombage des graines.

En référence aux figures 8 à 9, un mécanisme de réglage de pression et d'escamotage du disque ouvreur 5 comprend au moins un plat support disque 30 de section rectangulaire, guidé verticalement en partie supérieure dans la bride 7 de fixation du bras support de disque 6 sur la platine 38.

Il comprend, en outre, un ressort de compression 31 réglable et inséré verticalement entre le plat support de disque 30 et la bride 7 au centre dudit plat 30.

Ce ressort de compression 31 permet d'ajuster l'effort nécessaire à l'escamotage du disque lors de la rencontre d'un obstacle, c'est-à-dire qu'il est susceptible de se compresser pour permettre au bras 6 support de disque de s'escamoter verticalement.

Le plat support de disque 30 est immobilisé verticalement de façon relative à la bride 7 de fixation du bras, en partie supérieure, d'une part, par une goupille d'arrêt 32 fixée transversalement audit plat 30 et en partie inférieure, d'autre part, par la pression de contact du ressort 31.

Ce ressort 31 est guidé et maintenu en partie supérieure par une pièce de centrage 40 et en partie inférieure par une rondelle 34 guidée et arrêtée sur une pièce de liaison 35, de forme rectangulaire, sur le plat 30 support de disque.

Le réglage de la tension du ressort 31 s'effectue par serrage ou desserrage d'un écrou 41 autour d'une tige filetée de la pièce de liaison 35.

L'escamotage du disque ouvreur 5 est donc vertical et directement fonction de l'effort exercé par le disque 5 sur le ressort 31 dont la valeur avant déformation est réglée par l'utilisateur en fonction de la dureté du sol.

La pression de réglage avant escamotage est fonction du réglage en compression du ressort et donc de la longueur de serrage T de l'écrou 41 sur la tige filetée de la pièce de liaison 35, directement dans l'axe vertical dudit ressort 31.

Le plat support du disque 30 comprend des moyens de réglage de cette longueur de serrage T de l'écrou 41 c'est-à-dire des moyens de réglage de la compression du ressort 31 à des valeurs prédéterminées.

Ainsi, plusieurs repères 36 sont ménagés et répartis sur le plat support de disque 30, parallèlement à l'axe vertical du ressort 31.

Ces repères 36 correspondant, chacun, à une pression particulière du ressort 31 et, par conséquent, à une pression du disque 5 au sol, ils servent de repère visuel pour régler facilement la pression au sol à partir de laquelle le disque ouvreur 5 commence à s'escamoter.

Ainsi, en fonction de la nature du sol, de la culture envisagée et de la nature des obstacles susceptibles de perturber le plombage, on peut choisir la pression de contact maximum idéale du disque ouvreur 5.

En outre, la réaction du ressort 31 est rapide, directement opposée et proportionnelle à la trajectoire du bras 6 support de disque.

Grace à l'orientation du bras 6 support de disque, identique à la platine 38 comme défini précédemment suivant les angles α et β, on assure également que quelque soit la hauteur de la remontée du disque ouvreur 5, le contact du disque ouvreur avec la face F1 et l'arête 37 du soc 2 est maintenue.

En outre, avantageusement, la direction verticale de l'escamotage du disque ouvreur 5 permet de maintenir le réglage longitudinal L dudit disque ouvreur 5, quelque soit sa position de réglage.

Concernant le réglage de l'élément semeur 10, il peut, à titre d'exemple, être assuré par des moyens connus en soi tel qu'un ressort de compression guidé dans une tige et réglable par déplacement manuel d'une goupille d'arrêt le long de cette tige.

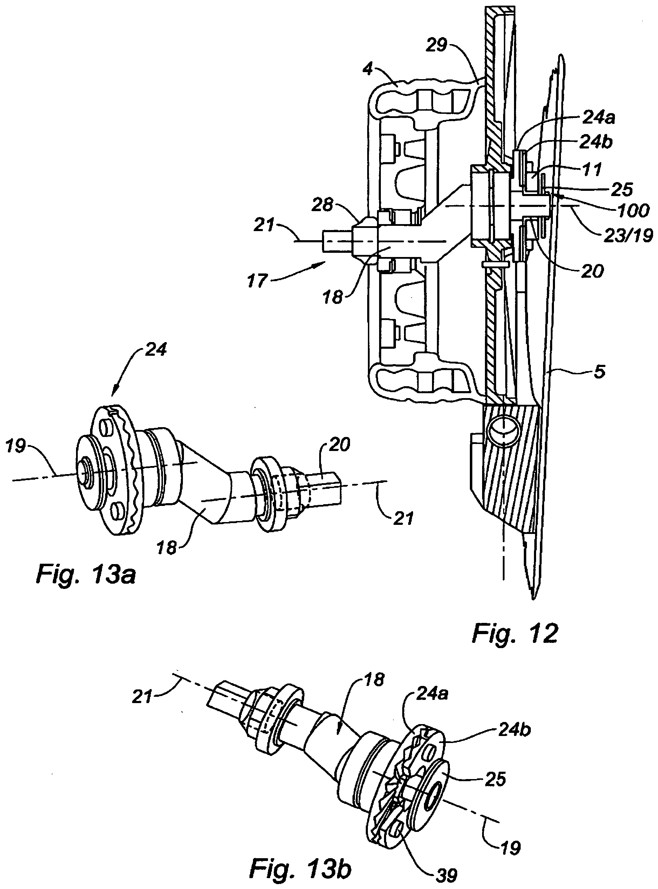

Par ailleurs, en référence aux figures 11a à 11e, 12, 13a et 13b, on observe que la position de la roue de jauge 4 est réglable en hauteur de façon relative à la roue plombeuse 1, ceci afin de régler la profondeur du semis, désignée par H sur la figure 1.

Dans un premier mode de réalisation de la présente invention, un mécanisme de réglage 17 de la hauteur de la roue de jauge 4 relativement à la roue plombeuse 1 comprend un arbre excentrique 18 articulé, à une extrémité autour d'un axe 19 porté par une bague 20 solidaire de la platine du support 11, et coaxial avec l'axe principal 23 de rotation de la roue plombeuse 1 et, à l'extrémité opposée, autour d'un axe de rotation 21 parallèle qui porte la roue de jauge 4, libre en rotation.

La hauteur de la roue de jauge 4 est, ainsi, fonction d'un angle de rotation ω de l'arbre 18 par rapport à la direction d'avancement A du semoir, illustré sur la figure 1.

Cette variation de l'angle ω est obtenue grâce à des moyens d'actionnement susceptibles de faire pivoter l'arbre 18 autour de l'axe 19, entraînant un changement de hauteur pour la roue de jauge 4 et, par conséquent, un changement de profondeur H dans le sol.

Dans un mode de réalisation, ces moyens d'actionnement comprennent au moins une clé escamotable 22 (visible sur le figure 1), insérée dans l'extrémité de section carrée de l'arbre 18, coaxiale à l'axe de rotation 21 de la roue de jauge 4.

Par ailleurs, l'arbre 18 est immobilisé en rotation par rapport à l'axe principal 23 de rotation de la roue plombeuse 1 de façon réglable grâce à un crabot de positionnement cranté 24 adapté placé entre l'arbre 18 et la platine de support 11 ou tout autre moyen adapté et mobile en rotation autour de l'axe 19.

Ce crabot comprend deux éléments 24a, 24b en regard munis, chacun, de crans destinés à coopérer entre eux sur les faces en vis-à-vis des deux éléments.

Dans une variante de réalisation, le crabot de positionnement est un crabot à ressort.

Par action sur la clé 22 formant moyen de préhension susceptible de tourner autour de l'axe 19 ou axe principal 23 de rotation de la roue plombeuse 1, on entraîne le pivotement du crabot de positionnement et de l'arbre 18 cran par cran autour dudit axe 23.

Le réglage de l'angle d'inclinaison w de l'arbre 18 s'effectue ainsi, par rotation, cran par cran, du crabot 24 qui libère en rotation la clé 22 pour la déplacer dans un plan vertical.

On peut ainsi passer d'une première position d'inclinaison de l'arbre 18 à une seconde position d'inclinaison différente par simple actionnement de la clé 22 du bas vers le haut et inversement dans un plan vertical.

Le maintien de l'angle d'inclinaison ω de l'arbre 18 et son immobilisation est assuré par la pression de rondelles élastiques 25 sur le crabot 24, placées entre la platine 11 et un circlips 100, solidaire de l'arbre 18.

Cette pression variable et progressive en fonction de la position en rotation du crabot 24 est transmise au crabot 24 par l'intermédiaire de l'arbre 18 qui coulisse librement dans la bague 20 coaxialement à l'axe 23 de la roue plombeuse 1.

En pratique, lorsque le crabot 24 est inactif, les éléments 24a et 24b sont jointifs et la pression appliquée aux ressorts 25 correspond à une valeur de réglage de précontrainte de montage de ces ressorts nécessaire à la stabilité de l'arbre 18 et des éléments associés sur la platine 11.

Lorsque le crabot 24 est mis en rotation par la clé 22, les éléments 24a et 24b du crabot 24 s'écartent progressivement de la valeur nécessaire au passage d'un cran à un autre.

Ainsi, à la pression de contrainte de montage s'ajoute un effort de pression variable et progressif appliqué aux ressorts 25 par le déplacement horizontal de l'élément 24a du crabot 24.

Par ailleurs, tel qu'illustré sur les figures 1, 11a et 11b, la platine support 11 de la roue plombeuse 1 et du soc 2, parallèle à la roue plombeuse 1, comprend des moyens de réglage 26 de la hauteur H de la roue de jauge 4 à des hauteurs prédéterminées.

Ainsi, plusieurs orifices 27 sont ménagés et répartis sur la surface de la platine 11 en arc de cercle.

Ces orifices 27 correspondent, chacun, à une inclinaison particulière de réglage de l'arbre 18 et du crabot 24 et, par conséquent, d'une hauteur H de la roue de jauge 4. Ils servent de repère visuel pour régler facilement la hauteur de la roue de jauge 4 à une hauteur prédéfinie.

La progression de l'inclinaison étant fonction du nombre de crans du crabot 24, il est possible de changer rapidement les crabots 24 avec un nombre de crans prédéfini et, par conséquent, d'adapter la précision du réglage de profondeur de la roue de jauge 4 aux particularités de chaque semis.

De part la présence des orifices 27, le réglage de la profondeur d'une roue de jauge 4 est, également, facilement reproductible pour l'ensemble des éléments semeurs 10 d'un même semoir.

On améliore, également, la précision et la constance de la profondeur du semis dans la mesure où la roue de jauge 4 est située au niveau de l'arrivée de la graine à semer.

En pratique la roue de jauge 4 contribue à l'entrainement de la roue plombeuse par friction des lèvres sur la face latérale de la roue plombeuse 1.

Par ailleurs, la vitesse de rotation différentielle entre la roue de jauge 4 et la roue plombeuse 1 permet de maintenir une surface lisse et propre de la face latérale de la roue plombeuse 1.

Dans un second mode de réalisation de la présente invention, le mécanisme 50 de réglage de la hauteur de la roue de jauge 4 relativement à la roue plombeuse 1 c'est-à-dire le mécanisme de réglage de la profondeur de mise en terre comprend deux profilés 51,52 coulissants et un système de vis écrou 53 pour bloquer en coulissement lesdits profilés 51,52.

Un tel mécanisme est mis en place sur les variantes de réalisations des éléments semeurs 10 illustrés sur les figures 11c, 11d et 11e.

Ce mécanisme comprend, en outre, un moyen d'actionnement et de préhension 54 tel qu'une manivelle qui permet, par rotation, d'entraîner la remontée ou la descente de la roue de jauge 4.

De plus, dans la varainte de réalisation illustrée sur la figure 11e, il est à noter que la variation de la profondeur de semis correspond à la moyenne de variation de hauteur entre la roue de jauge 4 avant et la roue de jauge 4 arrière.

## Revendications

1. Ensemble semeur (10) comprenant au moins un soc (2) en amont d'une roue plombeuse (1), une roue de jauge (4) et au moins un disque ouvreur adjacent au soc (2), le soc (2) présentant une face latérale plane (F1) en regard du disque ouvreur (5) et une arête (37) frontale, le disque ouvreur (5) étant monté en rotation autour d'un axe transversal à la direction d'avancement de l'ensemble semeur (10) et orienté de façon oblique relativement à ladite face latérale (F1) de sorte que le disque (5) vient en affleurement avec ladite arête (37) frontale du soc **caractérisé en ce que** le soc (2) comprend un canal présent sur sa face arrière, pour conduire des graines, qui entoure la périphérie externe de la roue plombeuse (1).

2. Ensemble semeur (10) selon la revendication 1 **caractérisé en ce que** l'empreinte du disque ouvreur (5) dans le sol se situe en dehors d'une section de rappui Sp des graines définie comme l'épaisseur, sur la largeur de la roue plombeuse (1), entre les extrémités inférieures du soc (2) et de la roue plombeuse (1).

3. Ensemble semeur (10) selon l'une des revendications 1 ou 2 **caractérisé en ce que** la partie inférieure du soc (2) comprend au moins un biseau (15).

4. Ensemble semeur (10) selon l'une des revendications 1 à 3 **caractérisé en ce que** la partie inférieure du soc (2) présente une forme symétrique par rapport à la ligne de semis.

5. Ensemble semeur (10) selon l'une des revendications 1 à 3 **caractérisé en ce que** la partie arrière du soc (2) présente une largeur plus grande que la largeur de la roue plombeuse (1).

6. Ensemble semeur (10) selon l'une des revendications 1 à 5 **caractérisé en ce qu'**il comprend, en outre, des moyens de réglage de la position du disque ouvreur (5) en hauteur de façon relative au soc de manière à régler la profondeur dudit disque (5) dans le sol et/ou des moyens de réglage de la position longitudinale du disque ouvreur (5) de manière à régler l'avancée dudit disque (5) par rapport au soc.

7. Ensemble semeur (10) selon la revendication 6 **caractérisé en ce que** les moyens de réglage de la hauteur et/ou de la position longitudinale du disque ouvreur (5) relativement au soc sont adaptés pour maintenir l'orientation oblique définie entre le disque ouvreur (5) et la face latérale (F1) du soc (2) à chaque déplacement dudit disque ouvreur (5) de sorte de garantir l'affleurement du disque ouvreur avec l'arête frontale (37) du soc (2).

8. Ensemble semeur (10) selon l'une des revendications 1 à 7 **caractérisé en ce qu'**il comprend, en outre, des moyens pour escamoter le disque ouvreur (5) dans une position inopérante sans contact avec le sol.

9. Ensemble semeur (10) selon l'une des revendications 1 à 8 **caractérisé en ce que** le disque ouvreur (5) et l'élément semeur (10) comprennent des moyens de pression au sol indépendants.

10. Ensemble semeur (10) selon l'une des revendications 1 à 9 **caractérisé en ce que** le disque ouvreur (5) et l'élément semeur (10) comprennent des moyens de pression au sol d'intensité réglable séparément.

11. Ensemble semeur (10) selon l'une des revendications 1 à 10 **caractérisé en ce qu'**il comprend, en outre, des moyens de réglage de la hauteur de la roue de jauge (4) relativement à la roue plombeuse (1) à des hauteurs prédéterminées, ces moyens comprenant au moins un arbre (18) articulé, d'une part, sur un axe coaxial à un axe de rotation de la roue plombeuse (1) et, d'autre part, sur un axe de rotation de la roue de jauge (4) de sorte d'excentrer la roue de jauge (4) de son axe de rotation lors du réglage de sa hauteur.

12. Ensemble semeur (10) selon la revendication 11 **caractérisé en ce que** les moyens de réglage de la hauteur de la roue de jauge (4) relativement à la roue plombeuse (1) comprennent, en outre, un crabot de positionnement (24) à crans ou à ressort.

13. Ensemble semeur (10) selon l'une des revendications 11 à 12 **caractérisé en ce que** les moyens de réglage de la hauteur de la roue de jauge (4) relativement à la roue plombeuse (1) comprennent, en outre, des moyens d'actionnement (22) susceptibles de faire pivoter l'arbre (18) autour de l'axe coaxial à l'axe de rotation de la roue plombeuse (1) de sorte de modifier l'angle d'inclinaison de l'arbre (18) par rapport à la direction d'avancement de l'ensemble semeur (10), ces moyens d'actionnement comprenant au moins un élément de préhension (22) monté à une extrémité de l'arbre (18) et susceptible de pivoter vers au moins une position indiquant une profondeur de la roue de jauge (4).

14. Semoir comprenant un châssis porteur sur lequel est articulé au moins un ensemble semeur selon l'une des revendications 1 à 13.

## Patentansprüche

1. Säeinheit (10), umfassend mindestens eine Pflugschar (2) vorgelagert vor einer Druckrolle (1), ein Furchenrad (4) und mindestens einen Scheibenvorschneider angrenzend an die Pflugschar (2), wobei die Pflugschar (2) eine ebene Seitenfläche (F1) gegenüber von dem Scheibenvorschneider (5) und eine Vorderkante (37) aufweist, wobei der Scheibenvorschneider (5) drehbar um eine Achse quer zur Richtung der Vorwärtsbewegung der Säeinheit (10) befestigt ist und schräg zur Seitenfläche (F1) derart ausgerichtet ist, dass die Scheibe (5) mit der Vorderkante (37) der Pflugschar fluchtet, **dadurch gekennzeichnet, dass** die Pflugschar (2) einen Kanal zum Leiten von Saatkörnern, der auf ihrer Rückseite vorhanden ist, aufweist, der den äußeren Umfang der Druckrolle (1) umgibt.

2. Säeinheit (10) nach Anspruch 1, **dadurch gekennzeichnet, dass** sich der Abdruck des Scheibenvorschneiders (5) im Boden außerhalb eines Andruckbereichs Sp der Saatkörner, der als die Dicke definiert ist, auf der Breite der Druckrolle (1) zwischen den unteren Enden der Pflugschar (2) und der Druckrolle (1) befindet.

3. Säeinheit (10) nach einem der Ansprüche 1 oder 2, **dadurch gekennzeichnet, dass** der untere Teil der Pflugschar (2) mindestens eine Abschrägung (15) aufweist.

4. Säeinheit (10) nach einem der Ansprüche 1 bis 3, **dadurch gekennzeichnet, dass** der untere Teil der Pflugschar (2) eine Form aufweist, die symmetrisch in Bezug auf die Aussaatreihe ist.

5. Säeinheit (10) nach einem der Ansprüche 1 bis 3, **dadurch gekennzeichnet, dass** der hintere Teil der Pflugschar (2) eine Breite aufweist, die größer als die Breite der Druckrolle (1) ist.

6. Säeinheit (10) nach einem der Ansprüche 1 bis 5, **dadurch gekennzeichnet, dass** sie ferner Mittel zum Einstellen der Höhenposition des Scheibenvorschneiders (5) in Bezug auf die Pflugschar zum Einstellen der Tiefe der Scheibe (5) in dem Boden und/oder Mittel zum Einstellen der Längsposition des Scheibenvorschneiders (5) zum Einstellen des Vorschubs der Scheibe (5) in Bezug auf die Pflugschar aufweist.

7. Säeinheit (10) nach Anspruch 6, **dadurch gekennzeichnet, dass** die Mittel zur Höheneinstellung und/oder zum Einstellen der Längsposition des Scheibenvorschneiders (5) in Bezug auf die Pflugschar geeignet sind, um die schräge Ausrichtung, die zwischen dem Scheibenvorschneider (5) und der Seitenfläche (F1) der Pflugschar (2) definiert ist, bei jeder Verschiebung des Scheibenvorschneiders (5) derart beizubehalten, um das Fluchten des Scheibenvorschneiders mit der Vorderkante (37) der Pflugschar (2) zu garantieren.

8. Säeinheit (10) nach einem der Ansprüche 1 bis 7, **dadurch gekennzeichnet, dass** sie ferner Mittel zum Einziehen des Scheibenvorschneiders (5) in eine Ruhestellung ohne Kontakt mit dem Boden aufweist.

9. Säeinheit (10) nach einem der Ansprüche 1 bis 8, **dadurch gekennzeichnet, dass** der Scheibenvorschneider (5) und das Säelement (10) unabhängige Mittel zum Druckausüben auf den Boden aufweisen.

10. Säeinheit (10) nach einem der Ansprüche 1 bis 9, **dadurch gekennzeichnet, dass** der Scheibenvorschneider (5) und das Säelement (10) Mittel zum Druckausüben auf den Boden mit separat einstellbarer Intensität aufweisen.

11. Säeinheit (10) nach einem der Ansprüche 1 bis 10, **dadurch gekennzeichnet, dass** sie ferner Mittel zur Höheneinstellung des Furchenrads (4) in Bezug auf die Druckrolle (1) in vorbestimmten Höhen aufweist, wobei diese Mittel mindestens eine Gelenkwelle (18) einerseits auf einer Achse, die koaxial zu einer Drehachse der Druckrolle (1) ist, und andererseits auf einer Drehachse des Furchenrads (4) derart aufweist, um das Furchenrad (4) beim Einstellen seiner Höhe von seiner Drehachse zu exzentrieren.

12. Säeinheit (10) nach Anspruch 11, **dadurch gekennzeichnet, dass** die Mittel zur Höheneinstellung des Furchenrads (4) in Bezug auf die Druckrolle (1) ferner eine Positionierklaue (24) mit Kerben oder mit Feder aufweist.

13. Säeinheit (10) nach einem der Ansprüche 11 bis 12, **dadurch gekennzeichnet, dass** die Mittel zur Höheneinstellung des Furchenrads (4) in Bezug auf die Druckrolle (1) ferner Betätigungsmittel (22) aufweisen, die geeignet sind, die Welle (18) um die Achse, die koaxial zu der Drehachse der Druckrolle (1) ist, derart zu drehen, um den Neigungswinkel der Welle (18) in Bezug auf die Richtung der Vorwärtsbewegung der Säeinheit (10) zu ändern, wobei diese Betätigungsmittel mindestens ein Greifelement (22) aufweisen, das an einem Ende der Welle (18) befestigt ist und geeignet ist, in mindestens eine Position zu schwenken, die eine Tiefe des Furchenrads (4) angibt.

14. Sämaschine, umfassend einen Tragrahmen, an dem mindestens eine Säeinheit nach einem der Ansprüche 1 bis 13 angelenkt ist.

## Claims

1. Seeding apparatus (10) comprising at least one share (2) upstream of a press wheel (1), a depth wheel (4) and at least one opening disc adjacent to the share (2), the share (2) having a planar lateral face (F1) facing the opening disc (5) and a frontal edge (37), the opening disc (5) being mounted to rotate about an axis transverse to the direction of forward travel of the seeding apparatus (10) and oriented obliquely relative to the said lateral face (F1) so that the disc (5) comes flush with the said frontal edge (37) of the share, **characterized in that** the share (2) comprises a canal present on its rear face, to convey seeds, which surrounds the external periphery of the press wheel (1).

2. Seeding apparatus (10) according to Claim 1, **characterized in that** the footprint of the opening disc (5) in the ground is outside of a seed firming section Sp defined as being the thickness, across the width of the press wheel (1), between the lower ends of the share (2) and of the press wheel (1).

3. Seeding apparatus (10) according to one of Claims 1 and 2, **characterized in that** the lower part of the share (2) comprises at least one chamfer (15).

4. Seeding apparatus (10) according to one of Claims 1 to 3, **characterized in that** the lower part of the share (2) has a shape that is symmetrical with respect to the seeding row.

5. Seeding apparatus (10) according to one of Claims 1 to 3, **characterized in that** the rear part of the share (2) has a width that is greater than the width of the press wheel (1).

6. Seeding apparatus (10) according to one of Claims 1 to 5, **characterized in that** it further comprises means of adjusting the position of the opening disc (5) heightwise relative to the share so as to adjust the depth of the said disc (5) in the ground and/or means of adjusting the longitudinal position of the opening disc (5) so as to adjust the lead that the said disc (5) has with respect to the share.

7. Seeding apparatus (10) according to Claim 6, **characterized in that** the means of adjusting the height and/or the longitudinal position of the opening disc (5) relative to the share are designed to maintain the oblique orientation defined between the opening disc (5) and the lateral face (F1) of the share (2) for each movement of the said opening disc (5), so as to guarantee that the opening disc is flush with the frontal edge (37) of the share (2).

8. Seeding apparatus (10) according to one of Claims 1 to 7, **characterized in that** it further comprises means for retracting the opening disc (5) into an inoperative position out of contact with the ground.

9. Seeding apparatus (10) according to one of Claims 1 to 8, **characterized in that** the opening disc (5) and the seeding element (10) comprise independent means of pressing onto the ground.

10. Seeding apparatus (10) according to one of Claims 1 to 9, **characterized in that** the opening disc (5) and the seeding element (10) comprise ground-pressing means, the intensity of pressing of which can be adjusted separately.

11. Seeding apparatus (10) according to one of Claims 1 to 10, **characterized in that** it further comprises means of adjusting the height of the depth wheel (4) relative to the press wheel (1) at predetermined heights, these means comprising at least one shaft (18) articulated, on the one hand, on an axis coaxial with an axis of rotation of the press wheel (1) and, on the other hand, on an axis of rotation of the depth wheel (4) so that the depth wheel (4) is offset from its axis of rotation as its height is adjusted.

12. Seeding apparatus (10) according to Claim 11, **characterized in that** the means of adjusting the height of the depth wheel (4) relative to the press wheel (1) further comprise a face-teeth or springloaded positioning dog coupling (24).

13. Seeding apparatus (10) according to one of Claims 11 to 12, **characterized in that** the means of adjusting the height of the depth wheel (4) relative to the press wheel (1) further comprise actuating means (22) capable of causing the shaft (18) to pivot about the axis coaxial with the axis of rotation of the press wheel (1) so as to alter the angular inclination of the shaft (18) with respect to the direction of forward travel of the seeding apparatus (10), these actuating means comprising at least one element (22) for grasping which is mounted at one end of the shaft (18) and able to pivot into at least one position indicating a depth of the depth wheel (4).

14. Seeding apparatus comprising a bearing chassis to which at least one seeding apparatus according to one of Claims 1 to 13 is articulated.
